# EUROPEAN PATENT APPLICATION

(11) **EP 2 732 694 A1**
(43) Date of publication of application: **21.05.2014**
(21) Application number: 12721683.6
(22) Date of filing: 17.05.2012
(51) Int. Cl.: A01F 25/00, E04H 5/08, A23B 7/04, A23B 7/02

(54) **VARIABLE STORAGE WAREHOUSE**

(30) Priority: 11.07.2011 KR 20110068629
(71) Applicant: Agriculture Company Hole In One Co., Ltd,, Daejeon 305-340 (KR)
(72) Inventor: KIM, Ki-Young, Daejeon 302-777 (KR)
(74) Representative: Von Kreisler Selting Werner - Partnerschaft von Patentanwälten und Rechtsanwälten mbB
(86) International application number: PCT/KR2012/003876
(87) International publication number: WO 2013/009001

(57) **Abstract**

The present invention relates to a variable storage warehouse 10 adapted to be inserted into and drawn from the ground, which includes: a guide depressed portion having a first guide depressed portion 21 formed in the ground, a second guide depressed portion 22 formed beneath the first guide depressed portion 21 and a third guide depressed portion 23 formed beneath the second guide depressed portion 22; a plurality of screw fixing plates 330 mounted on the bottom surface of the second guide depressed portion 22 and each having a plurality of through-holes formed thereon, each through-hole having a female screw thread formed along the inner periphery thereof; a plurality of posts 100 adapted to form the external walls of the storage warehouse 10 and each having a plate insertion slot 340 formed along one side thereof and open at the lower end thereof in such a manner as to insert one end of each screw fixing plate 330 thereinto; a screw 310 disposed in each post 100 in such a manner as to be inserted into the through-holes of each screw fixing plate 330; and a drive motor 300 coupled to the top of the screw 310 in such a manner as to rotate the screw 310.

## Description

### [Technical Field]

The present invention relates to a variable storage warehouse, and more particularly, to a variable storage warehouse that is configured wherein wall body frames are detachably mounted thereon to allow goods to be conveyed and stacked from any side of the storage warehouse and the number of wall body frames is increased or decreased in accordance with the use purposes and installation environments thereof, thereby freely expanding and reducing the size of the storage warehouse and enhancing the degrees of utilization of the stacking space of goods therein and the installation space thereof.

### [Background Art]

Generally, storage warehouses are used to store various goods like agro-foods, agricultural equipment and so on therein, and recently, agro-foods such as sweet potatoes, potatoes, onions, garlic and the like are stored in large quantities in the storage warehouses.

The goods like agro-foods and agricultural equipment stored in the storage warehouses are often dried or rotten in accordance with the changes of the temperature and humidity in the storage warehouse.

So as to solve the above-mentioned problems, thus, Korean Patent No.0951628 discloses an agro-foods storage warehouse that is capable of uniformly adjusting the internal temperature and humidity in the storage space, into which agro-foods are stored, in a simple and easy manner.

In addition to the control of the temperature and humidity in accordance with the stacking goods like agro-foods or agricultural equipment, however, there is an urgent need for development of a novel storage warehouse capable of preventing the storage warehouse itself from being collapsed under bad weather conditions and further to prevent the stacking goods from being changed in colors.

In many countries, damages caused by strong wind in rainy seasons or in summer and by heavy snow in winter have been drastically increased.

Therefore, there is a need for development of a storage warehouse replaceable for existing vinyl houses to prevent the damages caused by heavy rain or snow or strong wind.

### [Disclosure]

### [Technical Problem]

Accordingly, the present invention has been made in view of the above-mentioned problems occurring in the prior art, and it is an object of the present invention to provide a variable storage warehouse that is capable of detachably mounting wall body frames thereon to allow goods to be conveyed and stacked from any side of the storage warehouse.

It is another object of the present invention to provide a variable storage warehouse that is capable of detachably mounting wall body frames thereon to allow the size of the storage warehouse to be expanded or reduced in accordance with the use purposes and installation environments thereof.

It is yet another object of the present invention to provide a variable storage warehouse that is capable of being protected from bad weather conditions through the upward and downward movements thereof and wind pressure plates mounted thereon.

It is still another object of the present invention to provide a variable storage warehouse that is capable of exchanging cells with new ones if they are broken or damaged, thereby allowing the maintenance operation to be easily performed, wherein the cells are made of glass, plastic, wood or film materials, thereby being recyclable.

### [Technical Solution]

To accomplish the above object, according to the present invention, there is provided a variable storage warehouse adapted to be inserted into and drawn from the ground, including: a guide depressed portion having a first guide depressed portion formed in the ground, a second guide depressed portion formed beneath the first guide depressed portion and a third guide depressed portion formed beneath the second guide depressed portion; a plurality of screw fixing plates mounted on the bottom surface of the second guide depressed portion and having a plurality of through-holes formed thereon, each through-hole having a female screw thread formed along the inner periphery thereof; a plurality of posts adapted to form the external walls of the storage warehouse and each having a plate insertion slot formed along one side thereof and open at the lower end thereof in such a manner as to insert one end of each screw fixing plate thereinto; a screw disposed in each post in such a manner as to be inserted into the through-holes of each screw fixing plate; and a drive motor coupled to the top of the screw 310 in such a manner as to rotate the screw.

According to the present invention, desirably, the first, second and third guide depressed portions have a pair of guide walls spaced apart from each other in such a manner as to be inserted thereinto.

According to the present invention, desirably, the variable storage warehouse further includes wind pressure plates coupled at one ends thereof to the top end of the inside of the third guide depressed portion by means of hinges so as to adjust an inclination angle against the ground.

According to the present invention, desirably, the wind pressure plates comprise wind pressure plate support stands disposed on the bottom surface of the third guide depressed portion to support the wind pressure plates, and impact prevention plates provided on the top surfaces of the wind pressure plate support stands.

According to the present invention, desirably, a rotary shaft constituting each hinge is inserted at both ends thereof into a pair of wind pressure plate fixing stands spaced apart from each other on the top end of the inside of the third guide depressed portion.

According to the present invention, desirably, the plurality of posts spaced apart from each other by a given distance and wall bodies disposed between the neighboring posts constitute the external walls of the storage warehouse.

According to the present invention, desirably, the wall bodies include: a plurality of wall body frames constituting the external edges to the top and bottom and to the left and right thereof and having fixing rod grooves formed along the top and bottom sides facing each other and support rod grooves formed along the left and right sides facing each other; fixing rods each detachably coupled at both ends thereof to the fixing rod grooves of the top and bottom wall body frames and having the support rod grooves formed on the sides facing the support rod grooves of the left and right wall frames; and support rods each detachably coupled at both ends thereof to the support rod grooves facing each other.

According to the present invention, desirably, the wall bodies further include "+"-shape separation rods detachably inserted at the end portions thereof into separation rod grooves formed on the upper and lower sides of the support rod grooves of the left and right wall body frames, the support rod grooves of the fixing rods, and the support rods.

According to the present invention, desirably, the wall body frames or the fixing rods have lock lever grooves formed on the indoor sides thereof in such a manner as to be passed through the support rod grooves and to be extended toward the wall body frames or the fixing rods at both ends thereof, and the support rods have fastening slots formed on the end portions thereof in such a manner as to pass the support rods therethrough, so that the support rods are fastened to the wall body frames or the fixing rods by means of lock levers passed through the lock lever grooves and the fastening slots.

According to the present invention, desirably, the wall body frames, the fixing rods or the support rods have the lock lever grooves formed on the indoor sides thereof in such a manner as to be passed through the separation rod grooves and to be extended toward the wall body frames, the fixing rods or the support rods at both ends thereof, and the separation rods have the fastening slots formed on the end portions thereof in such a manner as to pass the separation rods therethrough, so that the separation rods are fastened to the wall body frames, the fixing rods or the support rods by means of the lock levers passed through the lock lever grooves and the fastening slots.

According to the present invention, desirably, the wall bodies further include a plurality of attachment grooves formed on the outdoor sides of the wall body frames, the fixing rods, the support rods and the separation rods, and cells coupled to the attachment grooves to cover each external wall of the storage warehouse.

According to the present invention, desirably, each cell includes: a cell frame adapted to form the outer edge thereof and having a plurality of attachment protrusions formed inserted into the attachment grooves and a sealing material groove formed along the inner edge thereof, into which a sealing material is coupledly inserted; and a cell panel attached to both surfaces of the cell frame.

According to the present invention, desirably, the external side cell panel has a cell film attached to the top surface thereof.

According to the present invention, desirably, a first entrance door and a second entrance door are disposed on the upper and lower portions of any one side of the storage warehouse in such a manner as to be openable through the upward and downward movements of the storage warehouse.

According to the present invention, desirably, the first entrance door and the second entrance door have distance sensors mounted on the top end portions thereof to sense the distance from the ground, so that the storage warehouse can be moved upwardly and downwardly in accordance with the sensed results.

According to the present invention, desirably, the variable storage warehouse further includes: a roof frame disposed on the top portion of the external walls of the storage warehouse; roof frame plates extended vertically on the top portion of the roof frame positioned between the posts facing each other; and a roof panel coupled to the top portions of the roof frame plates.

According to the present invention, desirably, lattice frames are disposed horizontally to sectionalize the space between the neighboring roof frame plates.

According to the present invention, desirably, each roof frame plate includes a fan mounted thereon.

According to the present invention, desirably, the roof frame includes a sealing material groove formed along the top surface thereof and a sealing material inserted into the sealing material groove.

According to the present invention, desirably, the roof panel has wind pressure sensors mounted on the external surface thereof.

According to the present invention, desirably, the storage warehouse further has a temperature and humidity sensor mounted at the inside thereof.

### [Advantageous Effect]

According to the present invention, the variable storage warehouse has the following advantages:
First, the wall body frames can be detachably mounted on the storage warehouse, thereby allowing goods to be conveyed and stacked from any side of the storage warehouse and enhancing the degree of utilization of the space therein.
Second, the wall body frames can be detachably mounted on the storage warehouse, thereby allowing the size of the storage warehouse to be expanded or reduced in accordance with the use purposes and installation environments thereof, reducing the construction cost thereof, and enhancing the degree of utilization of the space therearound.
Third, the variable storage warehouse can be protected from bad weather conditions through the upward and downward movements thereof and wind pressure plates mounted thereon, thereby minimizing the damages caused by wind, snow and rain.
Fourth, the variable storage warehouse can exchange cells with new ones if they are broken or damaged, thereby allowing the maintenance cost to be lower than that needed in the existing storage warehouse where the whole body should be exchanged, and especially, the frames are made of iron or aluminum and the cells are made of glass, plastic, wood or film materials, thereby allowing them to be recyclable.

### [Description of Drawings]

FIG.1 is a perspective view showing a variable storage warehouse according to the present invention.
FIG.2 is a perspective view showing entrance doors and cells in the variable storage warehouse according to the present invention.
FIG.3 is an exploded perspective view showing one cell of the variable storage warehouse according to the present invention.
FIGS.4a to 4c are sectional views showing the cell in the variable storage warehouse according to the present invention.
FIGS.5a and 5b are perspective views showing the assembled and disassembled states of wall body frames in the variable storage warehouse according to the present invention.
FIGS.6a and 6b are sectional views showing the upward and downward conveying states of the variable storage warehouse according to the present invention.
FIG.7 is a perspective view showing an air circulating state in the variable storage warehouse according to the present invention.
FIG.8 is a perspective view showing the state where wind pressure plates are open and closed in the variable storage warehouse according to the present invention.
FIG.9 is a perspective view showing a drive part in the variable storage warehouse according to the present invention.
FIG.10 is a perspective view showing the roof frames in the variable storage warehouse according to the present invention.
FIGS.11a to 11c are perspective views showing the wind directions in the variable storage warehouse according to the present invention.

### [Best Mode for Invention]

Hereinafter, an explanation on a variable storage warehouse according to the present invention will be given with reference to the attached drawings.

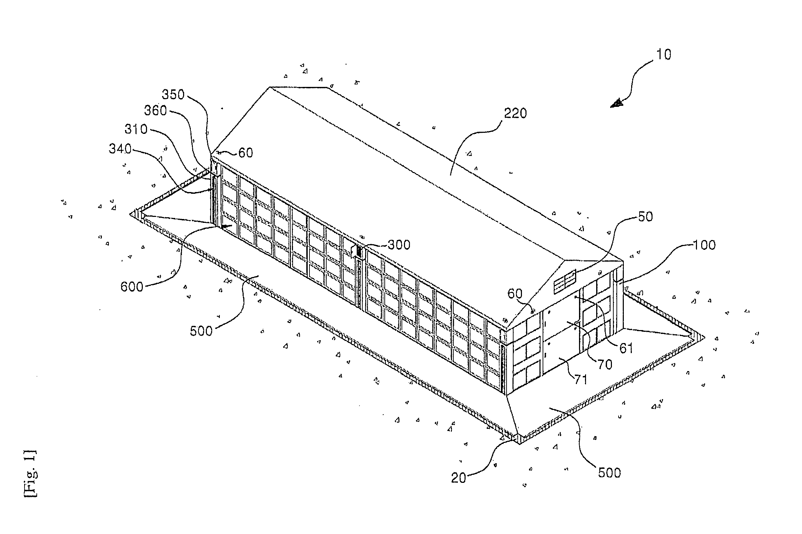

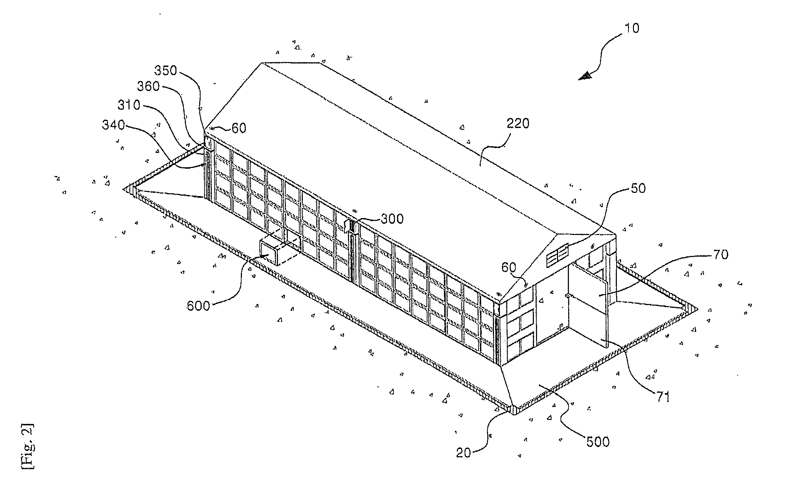

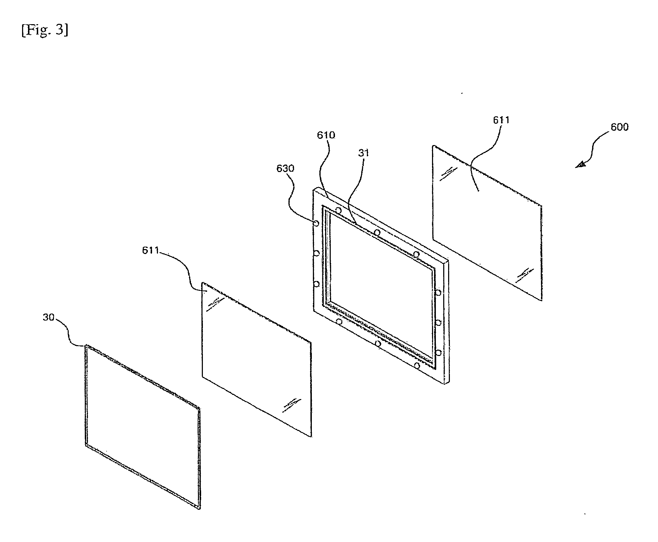

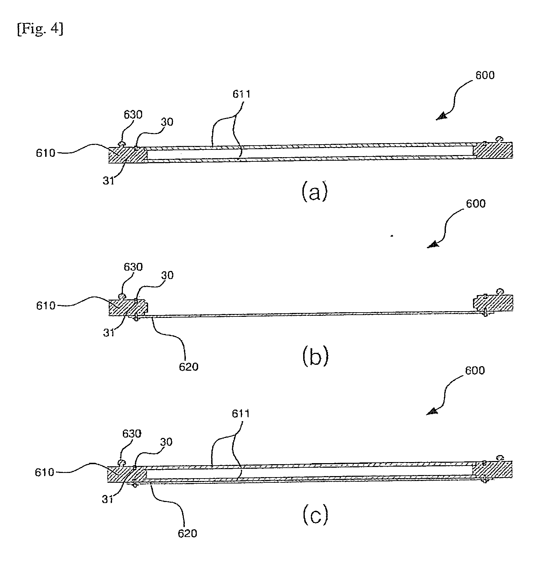

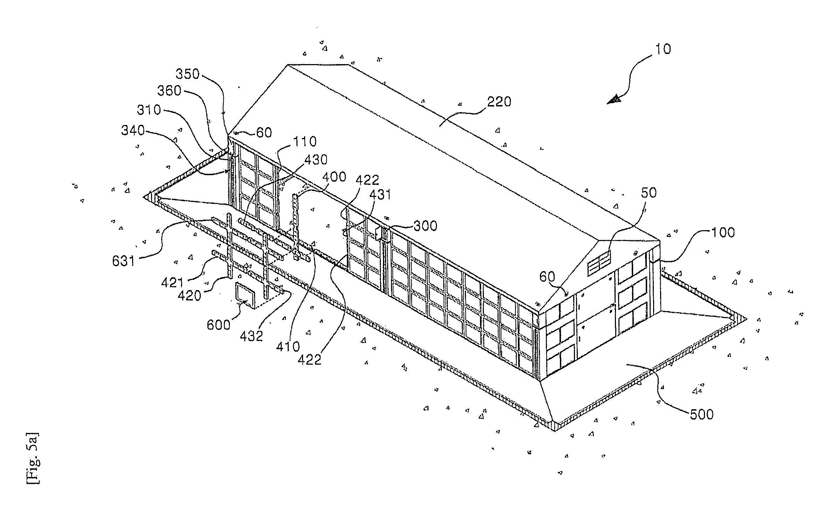

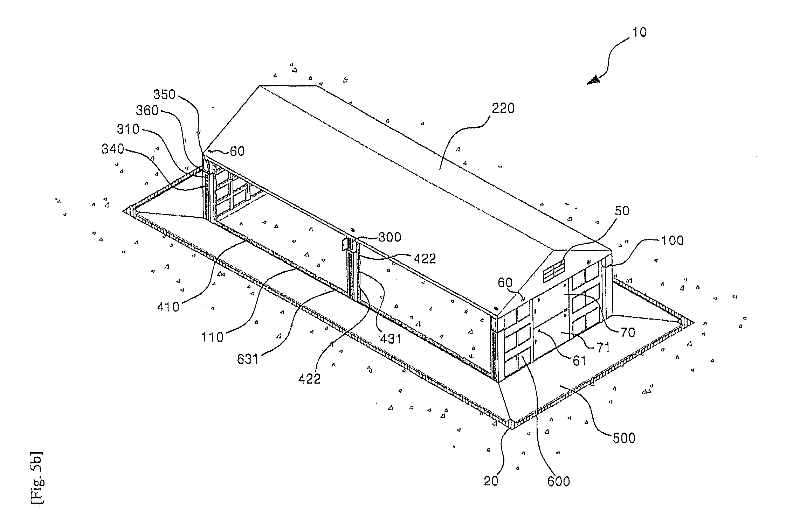

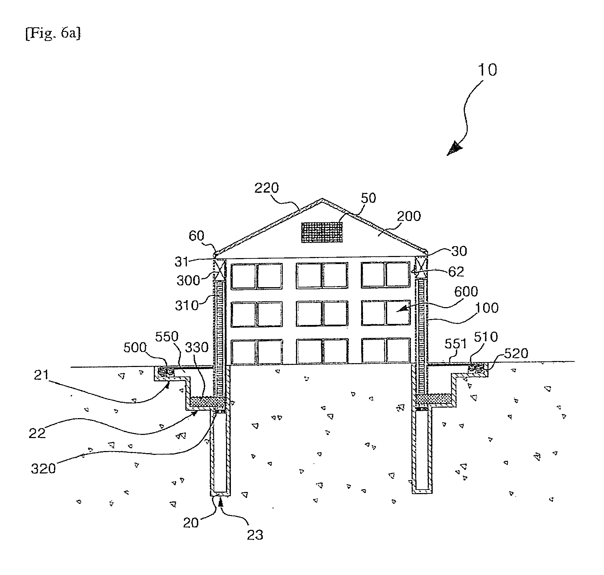

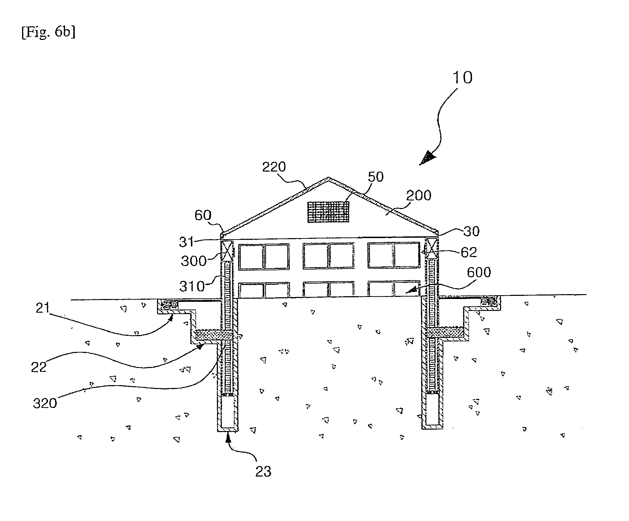

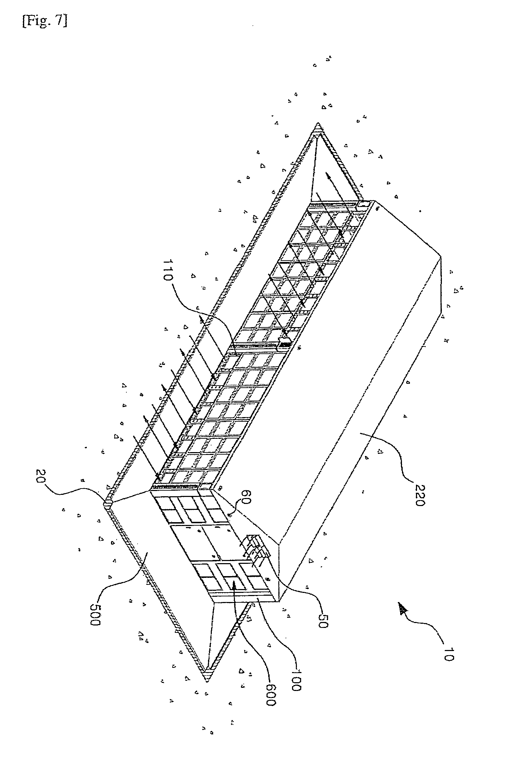

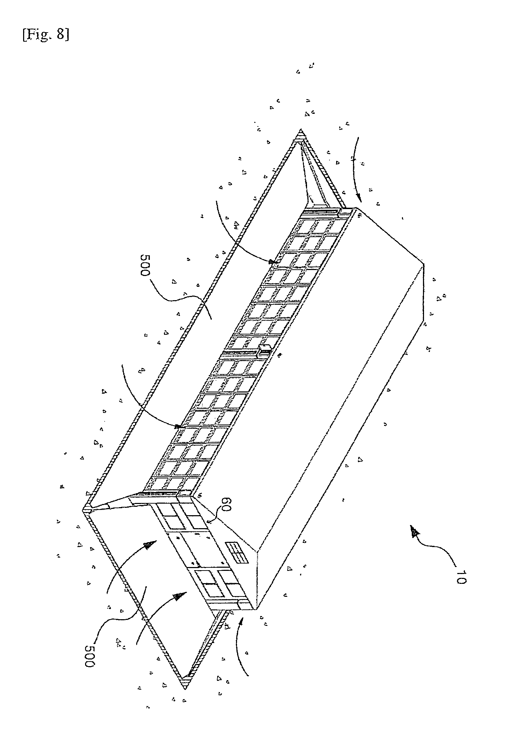

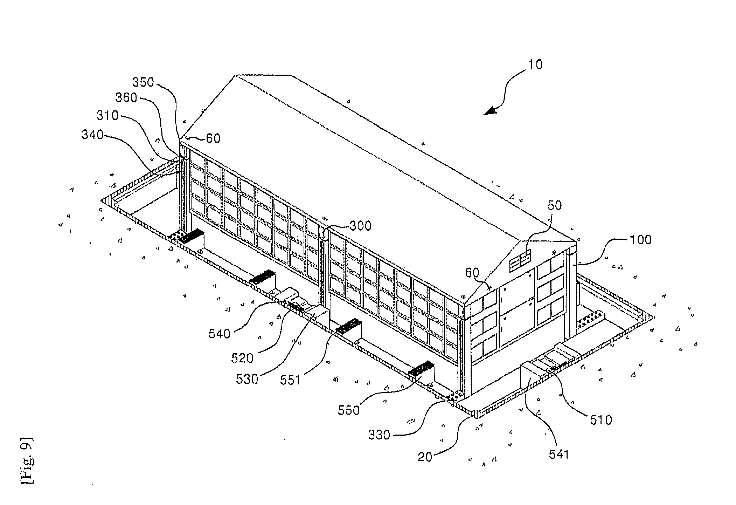

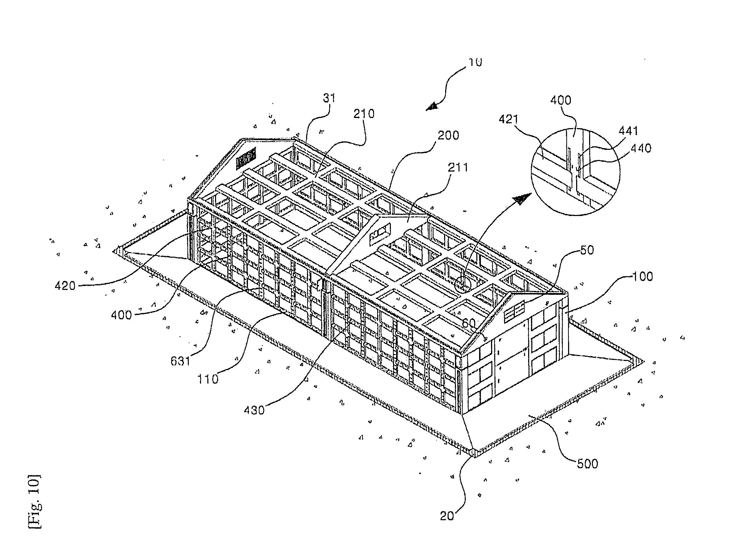

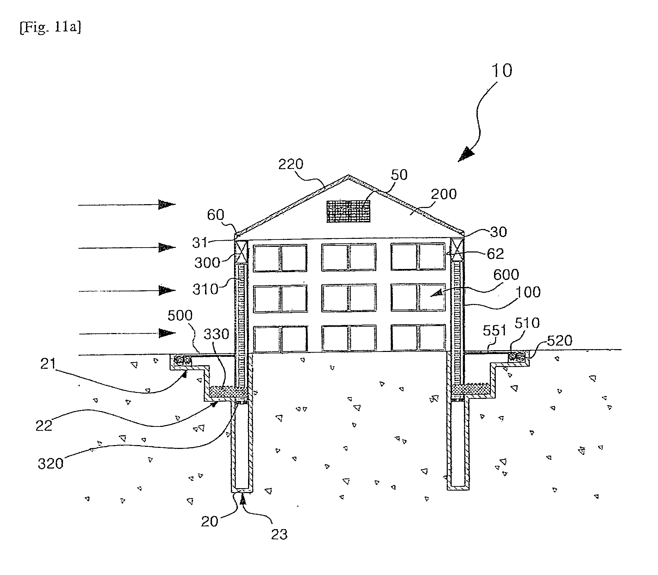

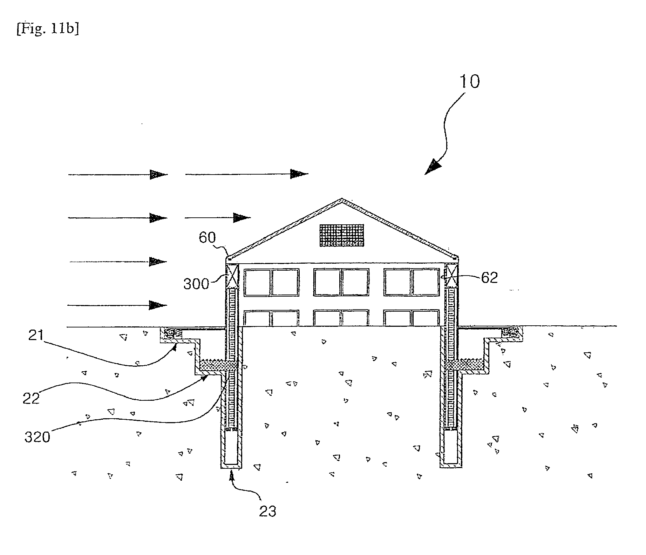

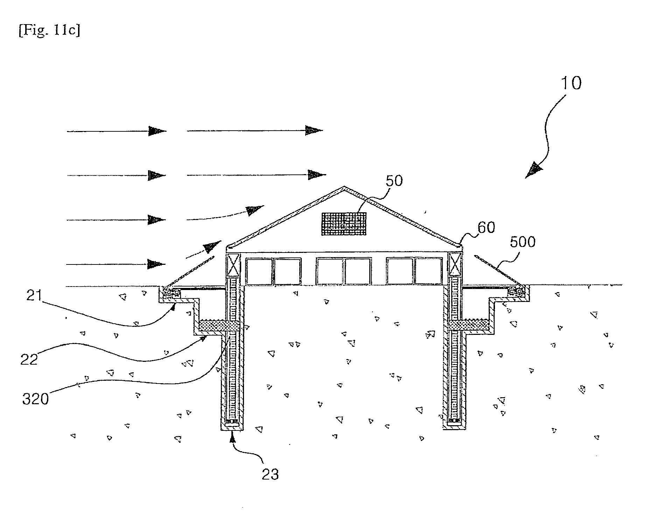

FIG.1 is a perspective view showing a variable storage warehouse according to the present invention, FIG.2 is a perspective view showing entrance doors and cells in the variable storage warehouse according to the present invention, FIG.3 is an exploded perspective view showing one cell of the variable storage warehouse according to the present invention, FIGS.4a to 4c are sectional views showing the cell in the variable storage warehouse according to the present invention, FIGS.5a and 5b are perspective views showing the assembled and disassembled states of wall body frames in the variable storage warehouse according to the present invention, FIGS.6a and 6b are sectional views showing the upward and downward conveying states of the variable storage warehouse according to the present invention, FIG.7 is a perspective view showing an air circulating state in the variable storage warehouse according to the present invention, FIG.8 is a perspective view showing the state where wind pressure plates are open and closed in the variable storage warehouse according to the present invention, FIG.9 is a perspective view showing a drive part in the variable storage warehouse according to the present invention, FIG.10 is a perspective view showing the roof frames in the variable storage warehouse according to the present invention, and FIGS.11a to 11c are perspective views showing the wind directions in the variable storage warehouse according to the present invention.

First, the configuration of the variable storage warehouse and the coupling relation of the components therein will be explained.

As shown in FIGS.1, 6a, 6b and 9, the variable storage warehouse 10 according to the present invention is configured in such a manner as to be inserted into and drawn from the ground, which includes: a guide depressed portion having a first guide depressed portion 21 formed in the ground, a second guide depressed portion 22 formed beneath the first guide depressed portion 21 and a third guide depressed portion 23 formed beneath the second guide depressed portion 22; a plurality of screw fixing plates 330 mounted on the bottom surface of the second guide depressed portion 22 and each having a plurality of through-holes formed thereon, each through-hole having a female screw thread formed along the inner periphery thereof; a plurality of posts 100 adapted to form the external walls of the storage warehouse 10 and each having a plate insertion slot 340 formed along one side thereof and open at the lower end thereof in such a manner as to insert one end of each screw fixing plate 330 thereinto; a screw 310 disposed in each post 100 in such a manner as to be inserted into the through-holes of each screw fixing plate 330; and a drive motor 300 coupled to the top of the screw 310 in such a manner as to rotate the screw 310.

A external walls of the storage warehouse can be inserted into the guide depressed portion.

A pair of guide walls 20 is spaced apart from each other in such a manner as to be inserted into the guide depressed portion.

The guide walls 20 are made of concrete and are formed by installing forms into the guide depressed portion.

The screw 310 is fastened to the screw fixing plate 330 in such a manner as to be moved upwardly and downwardly through the screw fixing plate 330 mounted on the bottom surface of the second guide depressed portion 22 by means of idling thereof.

A motor support rod 360 is disposed on the inside of each post 100 to support the lower end of the drive motor 300, and an openable motor cover 350 is disposed on one surface of the exterior of the upper portion of each post 100 to check the state of the drive motor 300.

The rectangular pipe of the post 100 is made of steel, which reduces the weight of the storage warehouse 10 and supports the maximum load applied from the storage warehouse 10.

The screw fixing plate 330 is fixed on the bottom surface of the second guide depressed portion 22 by means of a plurality of anchor bolts. Therefore, the screw 310 disposed inside the post 100 is rotated around the screw fixing plate 330 and is moved upwardly and downwardly.

The drive motor 300, which drives the screw 310, is operated by means of a control part provided at the outside. As a result, the drive motors 300 disposed in the storage warehouse 10 are at the same time operated at a given speed, thereby preventing the storage warehouse 10 from shaking or twisting.

As shown in FIG.8, wind pressure plates 500 are coupled at one ends thereof to the top end of the inside of the third guide depressed portion 23 by means of hinges 540 so as to adjust an inclination angle against the ground.

The wind pressure plates 500 are provided on one or more sides of the storage warehouse 10, and they are independently controlled in accordance with wind directions.

Wind pressure plate support stands 550 are disposed on the bottom surface of the third guide depressed portion 23 to support the wind pressure plates 500, and an impact prevention plate 551 is provided on the top surface of each wind pressure plate support stand 550.

The wind pressure plate support stands 550 are provided to support the load applied from material conveying means or workers moving on the top ends of the wind pressure plates 500. So as to reduce the impact of the applied load, further, the impact prevention plates 551 are provided on the wind pressure plate support stands 550, and they are made of an elastic material.

The rotary shaft constituting each hinge 540 is inserted at both ends thereof into a pair of wind pressure plate fixing stands 530 spaced apart from each other disposed on the top end of the inside of the third guide depressed portion 23.

A wind pressure plate motor 510 is provided in the facing direction of each hinge 540 to rotate the wind pressure plate 500, thereby performing the adjustment of the inclination angle of the wind pressure plate 500, and in this case, a wind pressure plate gear 520 disposed on the center of the rotary shaft and a gear disposed on the external surface of the wind pressure plate motor 510 are engaged with each other.

Accordingly, the angles of the wind pressure plates 500 are adjusted in accordance with the strengths of wind.

As shown in FIGS.5a, 5b and 10, the external walls of the storage warehouse 10 are formed by the plurality of posts 100 spaced apart from each other and wall bodies disposed between the neighboring posts 100.

The wall bodies include a plurality of wall body frames 110 constituting the external edges to the top and bottom and to the left and right thereof and having fixing rod grooves 410 formed along the top and bottom sides facing each other and support rod grooves 431 formed along the left and right sides facing each other.

The wall body frames 110 are bonded to each other by means of welding and are also bonded at both sides thereof to the posts 100.

Fixing rods 400 are detachably coupled at both ends thereof to the fixing rod grooves 410 of the top and bottom wall body frames 110 and have the support rod grooves 431 formed on the sides facing the support rod grooves 431 of the left and right wall frames 110, and support rods 430 are detachably coupled at both ends thereof to the support rod grooves 431 facing each other.

Separation rod grooves 422 are formed on the upper and lower sides of the support rod grooves 431 of the left and right wall body frames 110, the support rod grooves 431 of the fixing rods 400, and the support rods 430, and "+"-shaped separation rods 420 are detachably inserted at the end portions thereof into the separation rod grooves 422 formed by the wall body frames 110, the fixing rods 400 and the support rods 430.

The wall body frames 110 or the fixing rods 400 have lock lever grooves 441 formed on the indoor sides thereof in such a manner as to be passed through the support rod grooves 431 and to be extended toward the wall body frames 110 or the fixing rods 400 at both ends thereof, and the support rods 430 have fastening slots 432 formed on the end portions thereof in such a manner as to pass the support rods 430 therethrough, so that the support rods 430 are fastened to the wall body frames 110 or the fixing rods 400 by means of lock levers 440 passed through the lock lever grooves 441 and the fastening slots 432.

The wall body frames 110, the fixing rods 400 or the support rods 430 have the lock lever grooves 441 formed on the indoor sides thereof in such a manner as to be passed through the separation rod grooves 422 and to be extended toward the wall body frames 110, the fixing rods 400 or the support rods 430 at both ends thereof, and the separation rods 420 have the fastening slots 432 formed on the end portions thereof in such a manner as to pass the separation rods 420 therethrough, so that the separation rods 420 are fastened to the wall body frames 110, the fixing rods 400 or the support rods 430 by means of the lock levers 440 passed through the lock lever grooves 441 and the fastening slots 432.

Accordingly, the fixing rods 400, the separation rods 420 and the support rods 430 are detachably mounted on the wall body frames 110, thereby allowing goods to be conveyed and stacked from any side of the storage warehouse 10, and the number of wall body frames 110 is increased or decreased in accordance with the use purposes thereof, thereby freely expanding and reducing the size of the storage warehouse 10.

The wall body frames 110, the fixing rods 400, the support rods 430 and the separation rods 420 have a plurality of attachment grooves 631 formed on the outdoor sides thereof, and thus, cells 600 are coupled to the attachment grooves 631 to cover each external wall of the storage warehouse 10.

As shown in FIGS.3, 4 and 10, each cell 600 has a cell frame 610 adapted to form the external edge thereof, and the cell frame 610 has a plurality of attachment protrusions 630 inserted into the attachment grooves 631 and a sealing material groove 31 formed on one surface thereof, into which a sealing material 30 is coupledly inserted.

The sealing material groove 31 is formed to a given depth along the edge of one surface of the cell frame 610, into which the sealing material 30 is sealingly inserted.

A cell panel 611 is attached to both surfaces of the cell frame 610, and the cell panel 611 is made of a recyclable material like reinforced plastic, wood or glass.

Further, a cell film 620 is attached to the top surface of the cell panel 611, and the cell film 620 is made of vinyl or plastic film, which is provided to prevent the stacked goods inside the storage warehouse 10 from being changed in color or quality.

As shown in FIG.2, a first entrance door 70 and a second entrance door 71 are disposed on the upper and lower portions of any one side of the storage warehouse 10 in such a manner as to be openable through the upward and downward movements of the storage warehouse 10.

The first entrance door 70 and the second entrance door 71 have distance sensors 61 mounted on the top end portions thereof to sense the distance from the ground, so that the storage warehouse 10 can be moved upwardly and downwardly in accordance with the sensed results.

As shown in FIGS.1 and 10, a roof frame 200 is disposed on the top portions of the external walls of the storage warehouse 10, and roof frame plates 211 are extended vertically on the top portion of the roof frame 200 positioned between the posts 100 facing each other. A roof panel 220 is coupled to the top portions of the roof frame plates 211.

The sealing material groove 31 is formed along the top surfaces of the roof frame 200 and the roof frame plates 211, and the sealing material 30 is inserted into the sealing material groove 31, so that the underside of the roof panel 220 is bonded to the top surfaces of the roof frame 200 and the roof frame plates 211 into which the sealing material 30 is inserted, thereby forming a sealing relation therebetween.

Lattice frames 210 are disposed horizontally to sectionalize the space between the neighboring roof frame plates 211, which support the load of the roof panel 220 and prevent the movements of the roof frame 200.

A fan 50 is mounted on each roof frame plate 211 to adjust the temperature and humidity inside the storage warehouse 10 and to ventilate the internal air of the storage warehouse 10.

Wind pressure sensors 60 are mounted on the external surface of the roof panel 220 to sense the strengths of wind, and thus, the wind pressure plates 500 are operated in response to the sensed strengths and directions of wind.

Further, a temperature and humidity sensor 62 is mounted inside the storage warehouse 10 to sense the temperature and humidity in the storage warehouse 10.

So as to adjust the temperature and humidity in the storage warehouse 10 or to remove the dust occurring during the stacking operation in the storage warehouse 10, as shown in FIG.7, a portion of the cells 600 can be appropriately attached to or detached from the storage warehouse 10, and further, the air in the storage warehouse 10 can be circulated through the fans 50 mounted on the roof frame plates 211.

So as to decrease the damage applied to the storage warehouse 10 under bad weather conditions, as shown in FIGS.11a to 11c, the storage warehouse 10 is moved under the ground, and the wind pressure plates 500 are operated to allow wind to be vertically raised.

While the present invention has been described with reference to the particular illustrative embodiments, it is not to be restricted by the embodiments but only by the appended claims. It is to be appreciated that those skilled in the art can change or modify the embodiments without departing from the scope and spirit of the present invention.

## Claims

1. A variable storage warehouse 10 adapted to be inserted into and drawn from the ground, comprising:
a guide depressed portion having a first guide depressed portion 21 formed in the ground, a second guide depressed portion 22 formed beneath the first guide depressed portion 21 and a third guide depressed portion 23 formed beneath the second guide depressed portion 22;
a plurality of screw fixing plates 330 mounted on the bottom surface of the second guide depressed portion 22 and each having a plurality of through-holes formed thereon, each through-hole having a female screw thread formed along the inner periphery thereof;
a plurality of posts 100 adapted to form the external walls of the storage warehouse 10 and each having a plate insertion slot 340 formed along one side thereof and open at the lower end thereof in such a manner as to insert one end of each screw fixing plate 330 thereinto;
a screw 310 disposed in each post 100 in such a manner as to be inserted into the through-holes of each screw fixing plate 330; and
a drive motor 300 coupled to the top of the screw 310 in such a manner as to rotate the screw 310.

2. The variable storage warehouse according to claim 1, wherein the first, second and third guide depressed portions 21, 22 and 23 have a pair of guide walls 20 spaced apart from each other in such a manner as to be inserted thereinto.

3. The variable storage warehouse according to claim 1, further comprising wind pressure plates 500 coupled at one ends thereof to the top end of the inside of the third guide depressed portion 23 by means of hinges 540 so as to adjust an inclination angle against the ground.

4. The variable storage warehouse according to claim 3, wherein the wind pressure plates 500 comprise wind pressure plate support stands 550 disposed on the bottom surface of the third guide depressed portion 23 to support the wind pressure plates 500, and impact prevention plates 551 provided on the top surfaces of the wind pressure plate support stands 550.

5. The variable storage warehouse according to claim 3, wherein a rotary shaft constituting each hinge 540 is inserted at both ends thereof into a pair of wind pressure plate fixing stands 530 spaced apart from each other on the top end of the inside of the third guide depressed portion 23.

6. The variable storage warehouse according to claim 1, wherein the plurality of posts 100 spaced apart from each other by a given distance and wall bodies disposed between the neighboring posts 100 constitute the external walls of the storage warehouse 10.

7. The variable storage warehouse according to claim 6, wherein the wall bodies comprise:
a plurality of wall body frames 110 constituting the external edges to the top and bottom and to the left and right thereof and having fixing rod grooves 410 formed along the top and bottom sides facing each other and support rod grooves 431 formed along the left and right sides facing each other;
fixing rods 400 each detachably coupled at both ends thereof to the fixing rod grooves 410 of the top and bottom wall body frames 110 and having the support rod grooves 431 formed on the sides facing the support rod grooves 431 of the left and right wall frames 110; and
support rods 430 each detachably coupled at both ends thereof to the support rod grooves 431 facing each other.

8. The variable storage warehouse according to claim 7, wherein the wall bodies further comprise "+"-shaped separation rods 420 each detachably inserted at the end portions thereof into separation rod grooves 422 formed on the upper and lower sides of the support rod grooves 431 of the left and right wall body frames 110, the support rod grooves 431 of the fixing rods 400, and the support rods 430.

9. The variable storage warehouse according to claim 7, wherein the wall body frames 110 or the fixing rods 400 have lock lever grooves 441 formed on the indoor sides thereof in such a manner as to be passed through the support rod grooves 431 and to be extended toward the wall body frames 110 or the fixing rods 400 at both ends thereof, and the support rods 430 have fastening slots 432 formed on the end portions thereof in such a manner as to pass the support rods 430 therethrough, so that the support rods 430 are fastened to the wall body frames 110 or the fixing rods 400 by means of lock levers 440 passed through the lock lever grooves 441 and the fastening slots 432.

10. The variable storage warehouse according to claim 8, wherein the wall body frames 110, the fixing rods 400 or the support rods 430 have the lock lever grooves 441 formed on the indoor sides thereof in such a manner as to be passed through the separation rod grooves 422 and to be extended toward the wall body frames 110, the fixing rods 400 or the support rods 430 at both ends thereof, and the separation rods 420 have the fastening slots 432 formed on the end portions thereof in such a manner as to pass the separation rods 420 therethrough, so that the separation rods 420 are fastened to the wall body frames 110, the fixing rods 400 or the support rods 430 by means of the lock levers 440 passed through the lock lever grooves 441 and the fastening slots 432.

11. The variable storage warehouse according to claim 8, wherein the wall bodies further comprise:
a plurality of attachment grooves 631 formed on the outdoor sides of the wall body frames 110, the fixing rods 400, the support rods 430 and the separation rods 420; and
cells 600 coupled to the attachment grooves 631 to cover each external wall of the storage warehouse 10.

12. The variable storage warehouse according to claim 11, wherein each cell 600 comprises:
a cell frame 610 adapted to form the external edge thereof and having a plurality of attachment protrusions 630 inserted into the attachment grooves 631 and a sealing material groove 31 formed on one surface thereof, into which a sealing material 30 is coupledly inserted; and
a cell panel 611 attached to both surfaces of the cell frame 610.

13. The variable storage warehouse according to claim 12, wherein the external side cell panel 611 has a cell film 620 attached to the top surface thereof.

14. The variable storage warehouse according to claim 1, wherein a first entrance door 70 and a second entrance door 71 are disposed on the upper and lower portions of any one side of the storage warehouse 10 in such a manner as to be openable through the upward and downward movements of the storage warehouse 10.

15. The variable storage warehouse according to claim 14, wherein the first entrance door 70 and the second entrance door 71 have distance sensors 61 mounted on the top end portions thereof to sense the distance from the ground, so that the storage warehouse 10 can be moved upwardly and downwardly in accordance with the sensed results.

16. The variable storage warehouse according to claim 1, further comprising:
a roof frame 200 disposed on the top portion of the external walls of the storage warehouse 10;
roof frame plates 211 extended vertically on the top portion of the roof frame 200 positioned between the posts 100 facing each other; and
a roof panel 220 coupled to the top portions of the roof frame plates 211.

17. The variable storage warehouse according to claim 16, wherein lattice frames 210 are disposed horizontally to sectionalize the space between the neighboring roof frame plates 211.

18. The variable storage warehouse according to claim 16, wherein each roof frame plate 211 comprises a fan 50 mounted thereon.

19. The variable storage warehouse according to claim 16, wherein the roof frame 200 comprises:
a sealing material groove 31 formed along the top surface thereof; and
a sealing material 30 inserted into the sealing material groove 31.

20. The variable storage warehouse according to claim 16, wherein the roof panel 220 has wind pressure sensors 60 mounted on the external surface thereof.

21. The variable storage warehouse according to claim 1, further comprising a temperature and humidity sensor 62 mounted at the inside thereof.
